(19) **Europäisches Patentamt** / **European Patent Office** / **Office européen des brevets**

(11) **EP 2 541 754 B1**

(12) **EUROPEAN PATENT SPECIFICATION**

(45) Date of publication and mention
of the grant of the patent:
**27.03.2019 Bulletin 2019/13**

(21) Application number: **10846476.9**

(22) Date of filing: **23.02.2010**

(51) Int Cl.:
*H02P 5/46* *(2006.01)*   *B66B 1/30* *(2006.01)*
*H02P 25/22* *(2006.01)*   *H02P 21/06* *(2016.01)*

(86) International application number:
**PCT/JP2010/052698**

(87) International publication number:
**WO 2011/104809 (01.09.2011 Gazette 2011/35)**

(54) **ELEVATOR CONTROL DEVICE**

AUFZUGSTEUERUNGSVORRICHTUNG

DISPOSITIF DE COMMANDE D'ASCENSEUR

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(43) Date of publication of application:
**02.01.2013 Bulletin 2013/01**

(73) Proprietor: **Mitsubishi Electric Corporation
Tokyo 100-8310 (JP)**

(72) Inventor: **HIRABAYASHI, Kazufumi
Tokyo 100-8310 (JP)**

(74) Representative: **Hoffmann Eitle
Patent- und Rechtsanwälte PartmbB
Arabellastraße 30
81925 München (DE)**

(56) References cited:
**JP-A- 7 033 342     JP-A- 2008 156 071
US-A- 5 389 749**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

[Technical Field]

The present invention relates to an elevator control device.

[Background Art]

In general, an elevator has one driving system composed of a motor for driving a car, a power converter paired with this motor, and a controller of this power converter. And in this case, the capacity required of the motor is determined mainly by the speed of the elevator and the carrying capacity of the car, and the higher the speed and the larger the carrying capacity, the larger the capacity required of the motor.

Therefore, a driving device for a so-called high-speed or ultrahigh-speed elevator is required to have a driving system composed of a large-capacity motor and a large-capacity power converter paired with this motor.

However, for a transistor converter, a transistor inverter and the like which are used in a power converter, a maximum capacity which permits processing as an element is determined beforehand, and the capacity of a power converter is limited by the capacity of this element.

Therefore, there has been considered a drive control method which is called what is called a multi-drive method which involves using a plurality of small-capacity motors and a plurality of small-capacity power converters that provide pairs with these motors.

As a conventional elevator control device of the multi-drive method, there has been known a multi-drive elevator control device in which a plurality of power converters, a plurality of motors to which power is fed by these power converters, and a torque distribution section which is composed of a plurality of functions which determine the sharing of output among the plurality of power converters on the basis of torque demand are provided, a selection is made from the functions according to an operation mode and current commands and the like are outputted in accordance with the selected function, and taking these current commands and the like as input gate signals outputted via a PWM (pulse width modulation) device and a gate amplifier are transmitted to each of the power converters (refer to Patent Literature 1, for example).

Citation List

Patent Literature

[0007]

　Patent Literature 1: Japanese Patent Laid-Open No. 05-038182
　Patent Literature 2: US Patent No. 5 389 749 A

Summary of Invention

Technical Problem

However, in the conventional elevator control device described in Patent Literature 1, after performing the torque distribution to each power converter, gate signals are generated in the PWM device and the gate amplifier on the basis of command signals according to torque distribution results and gate signals are transmitted from the gate amplifier to each power converter.

Therefore, because of the presence of a plurality of power converters to which gate signals are to be transmitted, the wiring of the gate signal line which connects the gate amplifier and each power converter becomes very long, posing the problem that the noise immunity in these gate signals may decrease.

That is, it is impossible to transmit an appropriate driving signal (a gate signal) to a power converter due to the effect of noise, posing the problem that this may exert an adverse effect on the operation of an elevator due to, for example, a malfunction in an inverter.

An alternative solution to this problem may be disclosed in the elevator control device described in Patent Literature 2 where a single gate amplifier controls multiple power converters. However, in the case where a plurality of power converters are housed on one control panel in order to shorten the gate signal lines as far as possible, this poses the problem that component devices become big, impairing the degree of freedom in equipment arrangement, and the problem that the wiring within the control panel becomes intricate.

The present invention was made in order to solve such problems, and provides a multi-drive elevator control device which can shorten gate signal lines between a gate amplifier and each power converter and is capable of improving the noise immunity in gate signals.

And the second object is to provide a multi-drive elevator control device which can enhance the degree of freedom in equipment arrangement and is capable of simplifying the wiring which connects each device.

Means for Solving the Problems

An elevator control device according to an exemplary embodiment of the present invention, which comprises two or more driving controllers, a motor which drives an elevator by being controlled by each of the driving controllers, and a power converter which is provided in each of the driving controllers and supplies power to the motor, comprises: a speed controller which is provided in one of the driving controllers and outputs a torque command on the basis of a speed command; a torque distributor which is provided in the one driving controller and distributes the torque command to a distributed torque command of each of the driving controllers; and a communication device which transmits the distributed torque command to the other driving controller, wherein the power converter provided in the other driving controller supplies power to the motor in accordance with the distributed torque command transmitted by the communication device, according to claim 1.

Advantageous Effects of Invention

The elevator control device of the present invention, which is of a multi-drive method, produces the effect that it is possible to shorten gate signal lines which connect a gate amplifier and each power converter and hence it is possible to improve the noise immunity in gate signals.

And this elevator control device also produces the effect that it is possible to enhance the degree of freedom in equipment arrangement and at the same time it is possible to simplify the wiring which connects each device.

Brief Description of the Drawings

Figure 1 is a system block diagram showing the general configuration of an elevator control device related to Embodiment 1 of the present invention.
Figure 2 is an explanatory diagram showing the internal configuration of a speed controller related to Embodiment 1 of the present invention.
Figure 3 is an explanatory diagram showing the internal configuration of a torque distributor related to Embodiment 1 of the present invention.

Description of Embodiment

The present invention will be described in more detail with reference to the accompanying drawings. In each of the drawings, like numerals refer to like or corresponding parts and overlaps of description of these parts are appropriately simplified or omitted.

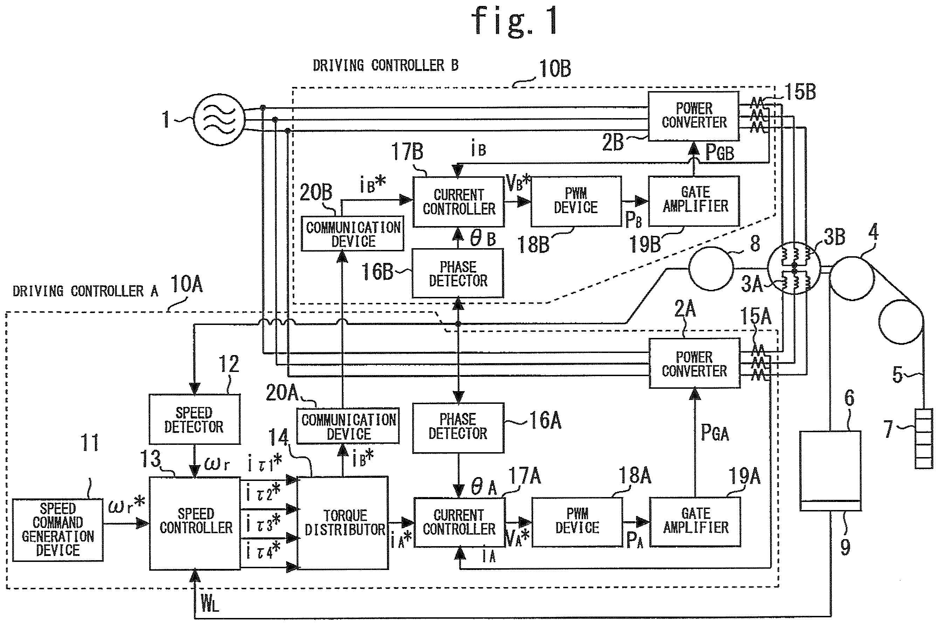

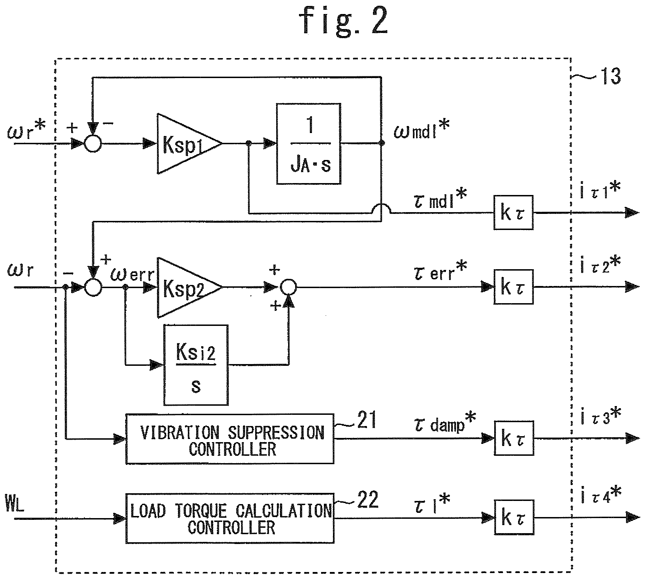

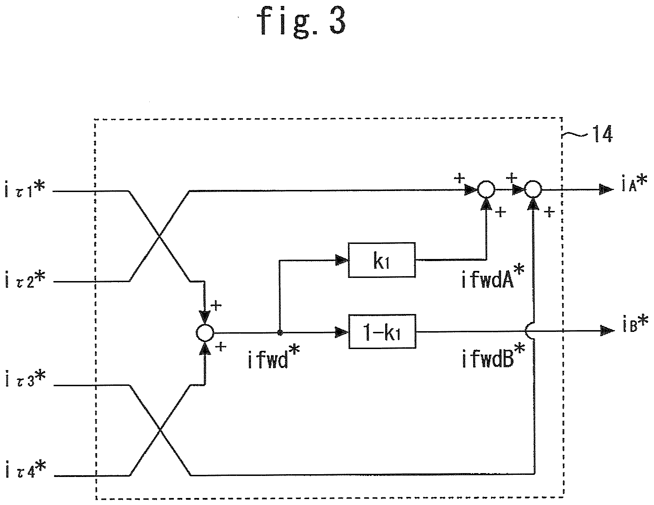

Figures 1 to 3 relate to Embodiment 1 of the present invention. Figure 1 is a system block diagram showing the general configuration of an elevator control device, Figure 2 is an explanatory diagram showing the internal configuration of a speed controller, and Figure 3 is an explanatory diagram showing the internal configuration of a torque distributor.

In the figures, reference numeral 1 denotes a commercial power source supplying power to a relevant elevator, which is a three-phase alternating current power source. The three-phase alternating current from the commercial power source 1 is inputted to a first power converter 2A and a second power converter 2B respectively. The voltage and frequency of the three-phase alternating current are converted in each of the first power converter 2A and the second power converter 2B and the three-phase alternating current is outputted as a variable-voltage, variable-frequency alternating current power.

The alternating current power outputted from the first power converter 2A is supplied to a first alternating current motor 3A and the alternating current power outputted from the second power converter 2B is supplied to a second alternating current motor 3B respectively. The first alternating current motor 3A and the second alternating current motor 3B are double three-phase alternating current motors, which performs driving in the operation of the relevant elevator.

And the first power converter 2A and the first alternating current motor 3A constitute a first driving system A, which is one of the driving systems of the relevant elevator, and the second power converter 2B and the second alternating current motor 3B constitute a second driving system B, which is the other of the driving systems of the relevant elevator.

A driving sheave 4 is connected to the rotary driving shaft of the double three-phase alternating current motor which the first alternating current motor 3A and the second alternating current motor 3B constitute, and a main rope 5 is wound on this driving sheave 4.

A car 6 arranged so as to be able to ascend and descend in a shaft, which is not shown, is connected to one end of this main rope 5, and a counterweight 7 which ascends and descends in the direction reverse to the car 6 in the shaft is connected to the other end of the main rope 5.

The alternating current motors (the first alternating current motor 3A and the second alternating current motor 3B) are provided with a position detector 8 which detects the rotational position of this rotary driving machine and outputs the rotational position as a position signal, and the car 6 is provided with a load detector 9 which detects the load in this car 6 and outputs the load as a load signal WL.

First, a description will be given below of a first driving controller 10A related to the control of the first driving system A.

A speed command generation device 11 provided in this first driving controller 10A is intended for generating a speed command $\omega r^*$ for controlling the running speed of the relevant elevator, and a speed detector 12 is intended for computing the running speed of the relevant elevator on the basis of a position signal from the position detector 8 and outputting the running speed as a speed signal $\omega r$.

And a speed controller 13 provided in this first driving controller 10A generates torque current commands $i\tau1^*$, $i\tau2^*$, $i\tau3^*$, and $i\tau4^*$ necessary for controlling the first driving system A and the second driving system B on the basis of the speed command $\omega r^*$ from the speed command generation device 11, the speed signal $\omega r$ from the speed detector 12, and the load signal WL from the load detector 9.

The torque current commands $i\tau1^*$, $i\tau2^*$, $i\tau3^*$, and $i\tau4^*$ outputted from the speed controller 13 are inputted to a torque distributor 14 provided in the first driving controller 10A.

This torque distributor 14 outputs distributed torque current commands iA* and iB* on the basis of the torque current commands iτ1*, iτ2*, iτ3*, and iτ4*.

iA* is the distributed torque current command to the first driving system A composed of the first power converter 2A and the first alternating current motor 3A, and iB* is the distributed torque current command to the second driving system B composed of the second power converter 2B and the second alternating current motor 3B.

Between the first power converter 2A and the first alternating current motor 3A, there is provided a first current detector 15A which detects the amount of the current supplied from the first power converter 2A to the first alternating current motor 3A and outputs the amount of the current as a current signal iA.

And a phase detector 16A provided in the first driving controller 10A detects the rotational phase of the first alternating current motor 3A on the basis of a position detection signal from the position detector 8 and outputs the rotational phase as a phase signal θA.

The distributed torque current command iA* outputted from the torque distributor 14, which is one of the distributed torque current commands, is inputted to the first current controller 17A provided in the first driving controller 10A.

This first current controller 17A calculates a voltage command VA* to the first alternating current motor 3A on the basis of the distributed torque current command iA* from the torque distributor 14, iA from the first current detector 15A and the phase signal θA from the first phase detector 16A and outputs the voltage command VA*.

The voltage command VA* outputted from a first current controller 17A is inputted to a first PWM device 18A provided in the first driving controller 10A, and this first PWM device 18A outputs a PWM signal PA on the basis of the voltage command VA*. Incidentally, PWM is an abbreviation for pulse width modulation.

This PWM signal PA is inputted to a first gate amplifier 19A provided in the first driving controller 10A, and this first gate amplifier 19A generates a gate pulse PGA on the basis of the PWM signal PA.

And the gate pulse PGA outputted from this first gate amplifier 19A is inputted to the first power converter 2A and the power supplied to the first alternating current motor 3A is controlled, whereby the driving of the first alternating current motor 3A is controlled.

The distributed torque current command iB* outputted from the torque distributor 14 provided in the first driving controller 10A, which is the other distributed torque current command, is transmitted to a second driving controller 10B related to the control of the second driving system B via a first communication device 20A provided in the first driving controller 10A.

This second driving controller 10B is provided with a second communication device 20B, and receives, via this second communication device 20B, a distributed torque current command iB* from the torque distributor 14, which is transmitted from the first communication device 20A provided in the first driving controller 10A.

Between the second power converter 2B and the second alternating current motor 3B, there is provided a second current detector 15B which detects the amount of the current supplied from the second power converter 2B to the second alternating current motor 3B and outputs the amount of the current as a current signal iB.

And a second phase detector 16B provided in the second driving controller 10B detects the rotational phase of the second alternating current motor 3B on the basis of a position detection signal from the position detector 8 and outputs the rotational phase as a phase signal θB.

And the distributed torque current command iB* received via the second communication device 20B is inputted to a second current controller 17B provided in the second driving controller 10B.

This second current controller 17B calculates a voltage command VB* to the second alternating current motor 3B on the basis of the distributed torque current command iB*, iB from the second current detector 15B, and the phase signal θB from the second phase detector 16B and outputs the voltage command VA*.

The voltage command VB* outputted from the second current controller 17B is inputted to a second PWM device 18B provided in the second driving controller 10B, and this second PWM device 18B outputs a PWM signal PB on the basis of the voltage command VB*.

This PWM signal PB is inputted to a second gate amplifier 19B provided in the second driving controller 10B, and this second gate amplifier 19B generates a gate pulse PGB on the basis of the PWM signal PB.

And the gate pulse PGB outputted from this second gate amplifier 19B is inputted to the second power converter 2B and the power supplied to the second alternating current motor 3B is controlled, whereby the driving of the second alternating current motor 3B is controlled.

The speed controller 13 provided in the first driving controller 10A calculates the torque current commands iτ1*, iτ2*, iτ3*, and iτ4* on the basis of the speed command ωr* from the speed command generation device 11, the speed signal ωr from the speed detector 12, and the load signal WL from the load detector 9 in more detail as follows (Figure 2.)

This speed controller 13 has the configuration of what is called model reference control, and calculates a model torque command value τmdl*, an error torque command value τerr*, a vibration damping torque command value τdamp*, and a load torque command value τl*.

First, the model torque command value τmdl* is calculated by multiplying a deviation from a model speed ωmdl* to speed command wr*, which will be described later, by a proportional gain Kps1. And the model speed ωmdl* is calculated by multiplying this model torque command value τmdl* by an integral gain (1/JA·s) containing a model inertia JA component of a relevant controlled object.

The error torque command value τerr* is calculated by the addition of a product obtained by multiplying ωerr, which is a deviation signal for the speed signal ωr of the model speed ωmdl*, by a proportional gain Ksp2 and a product obtained by multiplying this deviation signal ωerr by an integral gain (Ksi2/s).

The vibration damping torque command value τdamp* is calculated by extracting a vibration component from the speed signal ωr in a vibration suppression controller 21 provided in the speed controller 13 and converting the vibration component to a damping signal.

And the load torque command value τl* is calculated from the load signal WL in a load torque calculation controller 22 provided in the speed controller 13.

And each of the model torque command value τmdl*, the error torque command value τerr*, the vibration damping torque command value τdamp*, and the load torque command value τl* is multiplied by a torque constant kτ, whereby each torque command value is converted to a torque current command value, and each of a torque current command iτ1* from the model torque command value τmdl*, a torque current command iτ2* from the error torque command value τerr*, a torque current command iτ3* from the vibration damping torque command τdamp*, and a torque current command iτ4* from the load torque command value τl* is calculated and outputted.

Incidentally, the torque constant kτ used here is determined by the characteristics of the motors (the first alternating current motor 3A and the second alternating current motor 3B).

In the torque current command values iτ1*, iτ2*, iτ3*, and iτ4*, iτ2* and iτ3* are calculated from the speed signal ωr showing an actual speed of the relevant elevator detected by the speed detector 12, that is, iτ2* and iτ3* are torque current command values (complementary torques) which contain information showing an actual speed of the relevant elevator and serves as feedback.

And in contrast to these, iτ1* and iτ4* are calculated without using the speed signal ωr showing an actual speed of the relevant elevator, that is, iτ1* and iτ4* are torque current command values which do not contain information showing an actual speed of the relevant elevator and serves as feedforward.

The torque distributor 14 provided in the first driving controller 10A specifically calculates the distributed torque current command iA* to the first driving system A and the distributed torque current command iB* to the second driving system B on the basis of the torque current commands iτ1*, iτ2*, iτ3*, and iτ4* from the speed controller 13(Figure 3).

First, as described above, a feedforward current command ifwd* is calculated by finding a sum of iτ1* and iτ4*, which are torque current command values serving as feedforward. That is, the feedforward current command ifwd* is calculated by the following expression:

$$ifwd^* = i\tau1^* \text{ plus } i\tau4^*$$

Next, this feedforward current command ifwd* is distributed to the first driving system A and the second driving system B. The distribution ratio at this time is such that there is set a prescribed ratio k1 which satisfies $0 < k1 \leq 1$ for the first driving system A, and a ratio (1 - k1) is set for the second driving system B.

That is, a feedforward current command ifwdA* to be outputted to the first driving system A and a feedforward current command ifwdB* to be outputted to the second driving system B are calculated by the following expressions:

$$ifwdA^* = k1 \text{ x } ifwd^*$$

$$ifwdB^* = (1 - k1) \text{ x } ifwd^*$$

Furthermore, as described above, the following relationship exists between ifwdA* and ifwdB*. k1 related to this distribution ratio may be fixed as a prescribed constant or may be appropriately varied in the following rage according to the operation condition of the relevant elevator:

$$ifwdA^* : ifwdB^* = k1 : (1 - k1)$$

$$0 < k1 \leq 1$$

And the distributed torque current command iA* to the first driving system A which is provided with the torque distributor 14 is calculated by adding the torque current command values iτ2* and iτ3*, which serve as feedback as described above, to the feedforward current command ifwdA*, which is distributed to this first driving system A.

Furthermore, the distributed torque current command iB* to the second driving system B becomes the feedforward current command ifwdB* distributed to this second driving system B.

That is, the distributed torque current command iA* to be outputted to the first driving system A and the distributed torque current command iB* to be outputted to the second driving system B are calculated by the following expressions:

$$iA^* = ifwdA^* + i\tau2^* + i\tau3^*$$

$$iB^* = ifwdB^*$$

In the torque distributor 14 provided in the first driving controller 10A, in this manner the torque current command related to feedforward is distributed to the first driving system A and the second driving system B at a prescribed distribution ratio, the distributed torque current command iA* to the first driving system A is calculated by further adding the torque current command related to feedback to the torque current command related to feedforward, which was distributed to the first driving system A, and for the second driving system B, the distributed torque current command related to feedforward is calculated as the distributed torque current command iB* to the second driving system B.

Therefore, a component related to a speed deviation between the speed command $\omega r^*$ and the speed signal $\omega r$ is contained in the distributed torque current command iA* to the first driving system A, and a component related to a speed deviation is not contained in the distributed torque current command iB* to the second driving system B.

In the elevator control device configured as described above, first, in the speed controller 13 provided in the first driving controller 10A, the torque current commands $i\tau1^*$, $i\tau2^*$, $i\tau3^*$, and $i\tau4^*$ are generated on the basis of the speed command $\omega r^*$ from the speed command generation device 11, the speed signal $\omega r$ from the speed detector 12, and the load signal WL from the load detector 9 so as to be controlled in accordance with the speed command $\omega r^*$.

Next, in the torque distributor 14 provided in the first driving controller 10A, the distributed torque current command iA* to the first driving system A, which contains the torque current command component (speed deviation component) related to feedback, and the distributed torque current command iB* to the second driving system B, which does not contain the torque current command component (speed deviation component) related to feedback, are outputted on the basis of the torque current commands $i\tau1^*$, $i\tau2^*$, $i\tau3^*$, and $i\tau4^*$.

And the distributed torque current command iA* outputted from the torque distributor 14 to the first driving system A is inputted directly to the first current controller 17A of the first driving controller 10A, and the distributed torque current command iB* outputted from the torque distributor 14 to the second driving system B is transmitted to the second current controller 17B of the second driving controller 10B via the first communication device 20A and the second communication device 20B.

The distributed torque current command iA* outputted from the torque distributor 14 to the first driving system A goes through the fist current controller 17A provided in the first driving controller 10A, the first PWM device 18A, and the first gate amplifier 19A and becomes a gate pulse PGA, and the power supplied from the first power converter 2A to the first alternating current motor 3A is controlled by this gate pulse PGA, whereby the driving of the first alternating current motor 3A is controlled.

Furthermore, the distributed torque current command iB* to the second driving system B transmitted to the second driving controller 10B via the communication device goes through the second current controller 17B provided in the second driving controller 10B, the second PWM device 18B, and the second gate amplifier 19B and becomes a gate pulse PGB, and the power supplied from the second power converter 2B to the second alternating current motor 3B is controlled by this gate pulse PGB, whereby the driving of the second alternating current motor 3B is controlled.

Incidentally, although here the description was given of the case where there are two driving systems, it is possible to adopt a similar configuration in the case where there are not less than two driving systems. In this case, a speed controller and a torque distributor are provided only in a driving controller constituting one driving system, and a torque command from the torque distributor is transmitted via a communication device to the driving controllers of the other driving systems.

The elevator control device configured as described above is an elevator control device having two or more driving controllers, a motor which drives an elevator by being controlled by each of the driving controllers, and a power converter which is provided in each of the driving controllers and supplies power to the motors comprises: a speed controller which is provided in one of the driving controllers and outputs a torque command on the basis of a speed command; a torque distributor which is provided in one of the driving controllers and distributes the torque command to a distributed torque command of each of the driving controllers; and a communication device which transmits the distributed torque command to the other riving controller. In this elevator control device, the power converter provided in the other driving controller supplies power to the motor in accordance with the distributed torque command transmitted by the communication device. The elevator control device further comprises a gate amplifier which is provided in each of the driving controllers and outputs a gate pulse in accordance with the distributed torque command, and the power converter supplies power to the motor on the basis of the gate pulse.

For this reason, it is possible to easily configure a multi-drive elevator comprising two or more driving controllers each having a power converter which supplies power to a motor and the motor which drives an elevator by being controlled by each of the driving controllers, it is possible to realize a large-capacity system, it is possible to shorten the wiring of gate signal lines which connect the gate amplifier and each power converter, it is possible to improve noise immunity in gate signals, and it is possible to improve system reliability.

Furthermore, it is possible to enhance the degree of freedom in equipment arrangement and it is possible to simplify the wiring which connects each device.

Furthermore, the speed controller outputs a torque command on the basis of a speed deviation between the speed command and the speed detected from the rotation speed of the motor, and the torque distributor distributes a distributed torque command containing a component related to the speed deviation only to one driving controller, and distributes a distributed torque command not containing a component related to a speed deviation to the other driving controller.

For this reason, a component related to a speed deviation is not contained in the distributed torque command to the other driving controller via the communication device, and only a component related to feedforward is contained, with the result that there are few portions of variation for time.

Because in general, it is difficult to transmit, by communication, a torque command which varies at a shorter time interval than the communication cycle, omissions, delays and the like may occur in the transmission of a torque command by communication. And for example, when lags and delays caused by communication occur in a torque command transmitted to each driving system during a very-low speed operation, mutual interference (torque interference) occurs during torque supply, and ride comfort may worsen.

In contrast to this, in the elevator control device of the present invention, a component related to a speed deviation is not contained in a distributed torque command to the other driving controller to which transmission is performed via a communication device and, therefore, it is possible to lessen time variations of a signal component in transmission by communication and transmission delays of a torque command by communication and the like are less apt to occur and it is possible to prevent the worsening of ride comfort by reducing the occurrence of torque interference and the like.

Industrial Applicability

The present invention can be applied to a multi-drive elevator control device having two or more driving controllers, a motor which drives an elevator by being controlled by each of the driving controllers, and a power converter which is provided in each of the driving controllers and supplies power to the motor.

Description of Symbols

| 1 | commercial power source |
| 2A | first power converter |
| 2B | second power converter |
| 3A | first alternating current motor |
| 3B | second alternating current motor |
| 4 | driving sheave |
| 5 | main rope |
| 6 | car |
| 7 | counterweight |
| 8 | position detector |
| 9 | load detector |
| 10A | first driving controller |
| 10B | second driving controller |
| 11 | speed command generation device |
| 12 | speed detector |
| 13 | speed controller |
| 14 | torque distributor |
| 15A | first current detector |
| 15B | second current detector |
| 16A | first phase detector |
| 16B | second phase detector |
| 17A | first current controller |
| 17B | second current controller |
| 18A | first PWM device |
| 18B | second PWM device |
| 19A | first gate amplifier |
| 19B | second gate amplifier |
| 20A | first communication device |
| 20B | second communication device |
| 21 | vibration suppression controller |
| 22 | load torque calculation controller |

**Claims**

1. An elevator control device which comprises

two or more driving controllers (10A, 10B),
a motor (3A, 3B) which drives an elevator by being controlled by each of the driving controllers (10A, 10B),
a power converter (2A, 2B) which is provided in each of the driving controllers (10A, 10B) and supplies power to the motor (3A, 3B),
a speed controller (13) which is provided in one of the driving controllers (10A, 10B) and outputs a torque command on the basis of a speed command,
a torque distributor (14) which is provided in the one driving controller (10A) and distributes the torque command to a distributed torque command of each of the driving controllers (10A, 10B),
a communication device (20A, 20B) which transmits the distributed torque command to the other driving controller (10B), and
a gate amplifier (19A, 19B) which is provided in each of the driving controllers (10A, 10B) and outputs a gate pulse in accordance with the distributed torque command,
wherein the power converter (2A) provided in the one driving controller (10A) is configured to supply power to the motor (3A) based on the gate pulse output from the gate amplifier (19A) provided in the one driving controller (10A), wherein the gate amplifier (19B) provided in the other driving controller (10B) is configured to output the gate pulse in accordance with the distributed torque command transmitted by the communication device (20A, 20B), and wherein the power converter (2B) provided in the other driving controller (10B) is configured to supply power to the motor (3B) based on the gate pulse output from the gate amplifier (19B) provided in the other driving controller (10B).

2. The elevator control device according to claim 1, wherein the speed controller (13) is configured to output the torque command on the basis of a speed deviation between the speed command and a speed detected from a rotation speed of the motor (3A, 3B), and
wherein the torque distributor (14) is configured to distribute the distributed torque command containing a component related to the speed deviation only to the one driving controller (10A, 10B), and distributes the distributed torque command not containing the component related to the speed deviation to the other driving controller (10A, 10B).

**Patentansprüche**

1. Eine Aufzugsteuerungsvorrichtung umfassend zwei oder mehr Antriebsregler (10A, 10B), einen Motor(3A, 3B), der einen Aufzug antreibt, indem er von jedem der Antriebsregler (2A, 2B) gesteuert wird,
einen Leistungswandler (2A, 2B), der in jedem der Antriebsregler (10A, 10B) bereitgestellt ist und Leistung an den Motor (3A, 3B) liefert,
einen Geschwindigkeitsregler (13), der in einem der Antriebsregler (10A, 10B) bereitgestellt ist und einen Drehmomentbefehl, basierend auf einem Geschwindigkeitsbefehl, ausgibt,
einen Drehmomentverteiler (14), der in dem einen Antriebsregler (10A) bereitgestellt ist und den Drehmomentbefehl zu einem Verteilter-Drehmomentbefehl von jedem der Antriebsregler (10A, 10B) verteilt,
eine Kommunikationsvorrichtung (20A, 20B), die den Verteilter-Drehmomentbefehl an den anderen Antriebsregler (10B) überträgt, und
einen Torverstärker (19A, 19B), der in jedem der Antriebsregler (10A, 10B) bereitgestellt ist und einen Torimpuls in Übereinstimmung mit dem Verteilter-Drehmomentbefehl ausgibt,
wobei der Leistungswandler (2A), der in dem einen Antriebsregler (10A) bereitgestellt ist, konfiguriert ist, Leistung an den Motor (3A), basierend auf dem Torimpuls, der von dem in dem einen Antriebsregler (10A) bereitgestellten Torverstärker (19A) ausgegeben wird, zu liefern,

wobei der Torverstärker (19B), der in dem anderen Antriebsregler (10B) bereitgestellt ist, konfiguriert ist, den Torimpuls in Übereinstimmung mit dem Verteilter-Drehmomentbefehl, der von der Kommunikationsvorrichtung (20A, 20B) übertragen wird, auszugeben,
wobei der Leistungswandler (2B), der in dem anderen Antriebsregler (20A, 20B) bereitgestellt ist, konfiguriert ist, Leistung an den Motor (3B), basierend auf dem Torimpuls, der von dem in dem anderen Antriebsregler (10B) bereitgestellten Torverstärker (19B) ausgegeben wird, zu liefern.

2. Die Aufzugsteuerungsvorrichtung nach Anspruch 1, wobei der Geschwindigkeitsregler (13) konfiguriert ist, den Drehmomentbefehl, basierend auf einer Geschwindigkeitsabweichung zwischen dem Geschwindigkeitsbefehl und einer von einer Rotationsgeschwindigkeit des Motors (3A, 3B) detektierten Geschwindigkeit, auszugeben, und
wobei der Drehmomentverteiler (14) konfiguriert ist, den Verteilter-Drehmomentbefehl, der eine Komponente bezüglich der Geschwindigkeitsabweichung umfasst, nur an den einen Antriebsregler (10A, 10B) zu verteilen, und den Verteilter-Drehmomentbefehl, der nicht die Komponente bezüglich der Geschwindigkeitsabweichung umfasst, an den anderen Antriebsregler (10A, 10B) verteilt.

**Revendications**

1. Dispositif de commande d'ascenseur qui comprend deux dispositifs de commande de l'entraînement (10A, 10B) ou plus,
un moteur (3A, 3B) qui entraîne un ascenseur en étant commandé par chacun des dispositifs de commande de l'entraînement (10A, 10B),
un convertisseur de puissance (2A, 2B) qui est prévu dans chacun des dispositifs de commande de l'entraînement (10A, 10B) et alimente le moteur (3A, 3B),
un dispositif de commande de la vitesse (13) qui est prévu dans l'un des dispositifs de commande de l'entraînement (10A, 10B) et produit une instruction de couple sur la base d'une instruction de vitesse,
un dispositif de distribution du couple (14) qui est prévu dans le premier dispositif de commande de l'entraînement (10A) et qui distribue l'instruction de couple comme instruction de couple distribuée de chacun des dispositifs de commande de l'entraînement (10A, 10B),
un dispositif de communication (20A, 20B) qui transmet l'instruction de couple distribuée à l'autre dispositif de commande de l'entraînement (10B), et
un amplificateur à porte (19A, 19B) qui est prévu dans chacun des dispositifs de commande de l'entraînement (10A, 10B) et produit une impulsion de porte en fonction de l'instruction de couple distribuée,

dans lequel le convertisseur de puissance (2A) prévu dans le premier dispositif de commande de l'entraînement (10A) est configuré pour alimenter le moteur (3A) sur la base de l'impulsion de porte produite par l'amplificateur à porte (19A) prévu dans le premier dispositif de commande de l'entraînement (10A),

dans lequel l'amplificateur à porte (19B) prévu dans l'autre dispositif de commande de l'entraînement (10B) est configuré pour produire l'impulsion de porte en fonction de l'instruction de couple distribuée transmise par le dispositif de communication (20A, 20B), et

dans lequel le convertisseur de puissance (2B) prévu dans l'autre dispositif de commande de l'entraînement (10B) est configuré pour alimenter le moteur (3B) sur la base de l'impulsion de porte produite par l'amplificateur à porte (19B) prévu dans l'autre dispositif de commande de l'entraînement (10B).

2. Dispositif de commande d'ascenseur selon la revendication 1, dans lequel le dispositif de commande de la vitesse (13) est configuré pour produire l'instruction de couple sur la base d'un écart de vitesse entre l'instruction de vitesse et une vitesse détectée à partir d'une vitesse de rotation du moteur (3A, 3B), et dans lequel le dispositif de distribution du couple (14) est configuré pour distribuer l'instruction de couple distribuée contenant une composante liée à l'écart de vitesse uniquement au premier dispositif de commande de l'entraînement (10A, 10B), et distribue l'instruction de couple distribuée ne contenant pas la composante liée à l'écart de vitesse à l'autre dispositif de commande de l'entraînement (10A, 10B).

fig. 1

# fig. 2

EP 2 541 754 B1

fig. 3

**EP 2 541 754 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 5038182 A

- US 5389749 A